# EUROPEAN PATENT SPECIFICATION

(11) **EP 4 487 647 B1**
(45) Date of publication and mention of the grant of the patent: **17.06.2026**
(21) Application number: 23709375.2
(22) Date of filing: 02.03.2023
(51) Int. Cl.: H04W 76/14, H04W 40/22, H04W 88/04

(54) **HANDLING OF ESTABLISHMENT CAUSES IN SIDELINK RELAY SCENARIOS**
BEHANDLUNG VON ERRICHTUNGSURSACHEN IN NEBENSTRECKEN-RELAIS-SZENARIEN
TRAITEMENT DES CAUSES D'ÉTABLISSEMENT DANS LES SCÉNARIOS DE RELAIS DE LIAISON LATÉRALE

(30) Priority: 02.03.2022 US 202263315855 P
(43) Date of publication of application: 08.01.2025
(73) Proprietor: Telefonaktiebolaget LM Ericsson (publ), 164 83 Stockholm (SE)
(72) Inventor: ORSINO, Antonino, 02480 Kirkkonummi (FI)
(74) Representative: Ericsson
(86) International application number: PCT/EP2023/055337
(87) International publication number: WO 2023/166129

(56) References cited:
- WO-A1-2022/032034
- US-A1- 2020 178 343
- ZTE ET AL: "Consideration on the connection management of SL relay", vol. RAN WG2, no. electronic; 20211101 - 20211112, 22 October 2021 (2021-10-22), XP052066315, Retrieved from the Internet <URL:https://ftp.3gpp.org/tsg_ran/WG2_RL2/TSGR2_116-e/Docs/R2-2109859.zip R2-2109859 Consideration on the connection management of SL relay.doc> [retrieved on 20211022]
- INTEL CORPORATION: "Setting cause value for Relay UE access", vol. RAN WG2, no. Electronic meeting, Online; 20220221 - 20220303, 14 February 2022 (2022-02-14), XP052111111, Retrieved from the Internet <URL:https://ftp.3gpp.org/tsg_ran/WG2_RL2/TSGR2_117-e/Docs/R2-2203306.zip R2-2203306_SL Relay access cause value_Intel.docx> [retrieved on 20220214]

## Description

### Technical Field

The present disclosure is related to wireless communication systems and more particularly to calculating communication device mobility state using reference frequency.

### Background

Current wireless communication networks, e.g., based on the 4th Generation (4G) LTE (Long Term Evolution) or the 5th Generation (5G) NR (New Radio) technology as specified by 3GPP (3rd Generation Partnership Project), support device-to-device (D2D) communication modes to enable direct communication between UEs (User Equipments), sometimes also referred to as sidelink (SL) communication. Such D2D communication modes may for example be used for vehicle communications, e.g., including communication between vehicles, between vehicles and roadside communication infrastructure and, possibly, between vehicles and cellular networks. For the NR technology, sidelink transmissions are specified in 3GPP Release 16. The sidelink transmissions of the NR technology may be regarded as enhancements of the ProSe (PROximity-based SErvices) specified for the LTE technology. The radio interface used for the sidelink modes of the LTE technology and the NR technology is referred to as "PC5" interface. The radio interface used for uplink (UL) and downlink (DL) transmissions between a UE and an access node of the wireless communication network is referred to as "Uu" interface.

Four enhancements are particularly introduced to NR sidelink transmissions as follows. First, support for unicast and groupcast transmissions are added in NR sidelink. For unicast and groupcast, the physical sidelink feedback channel (PSFCH) is introduced for a receiver UE to reply the decoding status to a transmitter UE. Second, grant-free transmissions, which are adopted in NR uplink transmissions, are also provided in NR sidelink transmissions, to improve the latency performance. Third, to alleviate resource collisions among different sidelink transmissions launched by different UEs, it enhances channel sensing and resource selection procedures, which also lead to a new design of physical shared control channel (PSCCH). Fourth, to achieve a high connection density, congestion control (and thus the quality of service (QoS) management) is supported in NR sidelink transmissions.

To enable the above enhancements, new physical channels and reference signals are introduced in NR (available in LTE before).

Physical Sidelink Shared Channel (PSSCH) is a sidelink (SL) version of a physical downlink shared channel (PDSCH). The PSSCH is transmitted by a sidelink transmitter UE, which conveys sidelink transmission data, system information (SI) blocks (SIBs) for radio resource control (RRC) configuration, and a part of the sidelink control information (SCI).

PSFCH is a SL version of a physical uplink control channel (PUCCH). The PSFCH is transmitted by a sidelink receiver UE for unicast and groupcast, which conveys 1 bit information over 1 resource block (RB) for the hybrid automatic request (HARQ) acknowledgement (ACK) and the negative ACK (NACK). In addition, channel state information (CSI) is carried in the medium access control (MAC) control element (CE) over the PSSCH instead of the PSFCH.

Physical Sidelink Common Control Channel (PSCCH) is a SL version of a physical downlink control channel (PDCCH). When the traffic to be sent to a receiver UE arrives at a transmitter UE, a transmitter UE should first send the PSCCH, which conveys a part of SCI (e.g., a SL version of DCI) to be decoded by any UE for the channel sensing purpose, including the reserved time-frequency resources for transmissions, demodulation reference signal (DMRS) pattern and antenna port, etc.

Sidelink Primary Synchronization Signal (S-PSS) and Sidelink Secondary Synchronization Signal (S-SSS) is similar to downlink transmissions in NR, in sidelink transmissions, primary and secondary synchronization signals (called S-PSS and S-SSS, respectively) are supported. Through detecting the S-PSS and S-SSS, a UE is able to identify the sidelink synchronization identity (SSID) from the UE sending the S-PSS/S-SSS. Through detecting the S-PSS/S-SSS, a UE is therefore able to know the characteristics of the UE transmitting the S-PSS/S-SSS. A series of process of acquiring timing and frequency synchronization together with SSIDs of UEs is called initial cell search. Note that the UE sending the S-PSS/S-SSS may not be necessarily involved in sidelink transmissions, and a node, e.g., a UE, an eNB (evolved Node B), or gNB sending the S-PSS/S-SSS is called a synchronization source. There are 2 S-PSS sequences and 336 S-SSS sequences forming a total of 672 SSIDs in a cell.

Physical Sidelink Broadcast Channel (PSBCH) is transmitted along with the S-PSS/S-SSS as a synchronization signal/PSBCH block (SSB). The SSB has the same numerology as PSCCH/PSSCH on that carrier, and an SSB should be transmitted within the bandwidth of the configured bandwidth part (BWP). The PSBCH conveys information related to synchronization, such as the direct frame number (DFN), indication of the slot and symbol level time resources for sidelink transmissions, in-coverage indicator, etc. The SSB is transmitted periodically at every 160 ms.

DMRS, phase tracking reference signal (PT-RS), and channel state information reference signal (CSI-RS) are physical reference signals supported by NR downlink (DL) or uplink (UL) transmissions and are also adopted by sidelink transmissions. Similarly, the PT-RS is only applicable for frequency range 2 (FR2) transmission.

Another new feature is the two-stage SCI. This a version of the DCI for SL. Unlike the DCI, only part (e.g., a first stage) of the SCI is sent on the PSCCH. This part is used for channel sensing purposes (including the reserved time-frequency resources for transmissions, DMRS pattern and antenna port, etc.) and can be read by all UEs while the remaining (e.g., second stage) scheduling and control information such as a 8-bits source identity (ID) and a 16-bits destination ID, NDI, RV and HARQ process ID is sent on the PSSCH to be decoded by the receiver UE.

Similar as for ProSe in LTE, NR sidelink transmissions have the following two modes of resource allocations: Mode 1) Sidelink resources are scheduled by a gNB; and Mode 2) The UE autonomously selects sidelink resources from a (pre-)configured sidelink resource pool(s) based on the channel sensing mechanism.

For the in-coverage UE, a gNB can be configured to adopt Mode 1 or Mode 2. For the out-of-coverage UE, only Mode 2 can be adopted.

As in LTE, scheduling over the sidelink in NR is done in different ways for Mode 1 and Mode 2. Mode 1 supports dynamic grants and configured grants.

Dynamic grant: When the traffic to be sent over sidelink arrives at a transmitter UE, this UE should launch the four-message exchange procedure to request sidelink resources from a gNB (SR on UL, grant, BSR on UL, grant for data on SL sent to UE). During the resource request procedure, a gNB may allocate a sidelink radio network temporary identifier (SL-RNTI) to the transmitter UE. If this sidelink resource request is granted by a gNB, then a gNB indicates the resource allocation for the PSCCH and the PSSCH in the DCI conveyed by PDCCH with cyclic redundancy check (CRC) scrambled with the SL-RNTI. When a transmitter UE receives such a DCI, a transmitter UE can obtain the grant only if the scrambled CRC of DCI can be successfully solved by the assigned SL-RNTI. A transmitter UE then indicates the time-frequency resources and the transmission scheme of the allocated PSSCH in the PSCCH, and launches the PSCCH and the PSSCH on the allocated resources for sidelink transmissions. When a grant is obtained from a gNB, a transmitter UE can only transmit a single transmission block (TB). As a result, this kind of grant is suitable for traffic with a loose latency requirement.

Configured grant: For the traffic with a strict latency requirement, performing the four-message exchange procedure to request sidelink resources may induce unacceptable latency. In this case, prior to the traffic arrival, a transmitter UE may perform the four-message exchange procedure and request a set of resources. If a grant can be obtained from a gNB, then the requested resources are reserved in a periodic manner. Upon traffic arriving at a transmitter UE, this UE can launch the PSCCH and the PSSCH on the upcoming resource occasion. In fact, this kind of grant is also known as grant-free transmissions.

In both dynamic grant and configured grant, a sidelink receiver UE cannot receive the DCI (since it is addressed to the transmitter UE), and therefore a receiver UE should perform blind decoding to identify the presence of PSCCH and find the resources for the PSSCH through the SCI.

When a transmitter UE launches the PSCCH, CRC is also inserted in the SCI without any scrambling.

In the Mode 2 resource allocation, when traffic arrives at a transmitter UE, this transmitter UE should autonomously select resources for the PSCCH and the PSSCH. To further minimize the latency of the feedback HARQ ACK/NACK transmissions and subsequently retransmissions, a transmitter UE may also reserve resources for PSCCH/PSSCH for retransmissions. To further enhance the probability of successful TB decoding at one shot and thus suppress the probability to perform retransmissions, a transmitter UE may repeat the TB transmission along with the initial TB transmission. This mechanism is also known as blind retransmission. As a result, when traffic arrives at a transmitter UE, then this transmitter UE should select resources for the following transmissions: 1) The PSSCH associated with the PSCCH for initial transmission and blind retransmissions; and 2) The PSSCH associated with the PSCCH for retransmissions.

Since each transmitter UE in sidelink transmissions should autonomously select resources for above transmissions, how to prevent different transmitter UEs from selecting the same resources turns out to be a critical issue in Mode 2. A particular resource selection procedure is therefore imposed to Mode 2 based on channel sensing. The channel sensing algorithm involves measuring RSRP (Reference Signal Received Power) on different subchannels and requires knowledge of the different UEs power levels of DMRS on the PSSCH or the DMRS on the PSCCH depending on the configuration. This information is known only after receiver SCI launched by (all) other UEs. The sensing and selection algorithm is rather complex.

Layer 2 (L2) UE-to-Network (U2N) relay is described below and in TR 23.752 clause 6.7. In this clause, the protocol architecture supporting a L2 UE-to-Network Relay UE is provided. The L2 UE-to-Network Relay UE provides forwarding functionality that can relay any type of traffic over the PC5 link. The L2 U2N Relay UE provides the functionality to support connectivity to the 5GS for remote UEs. A UE is considered to be a remote UE if it has successfully established a PC5 link to the L2 U2N Relay UE. A remote UE can be located within NG-RAN coverage or outside of NG-RAN coverage.

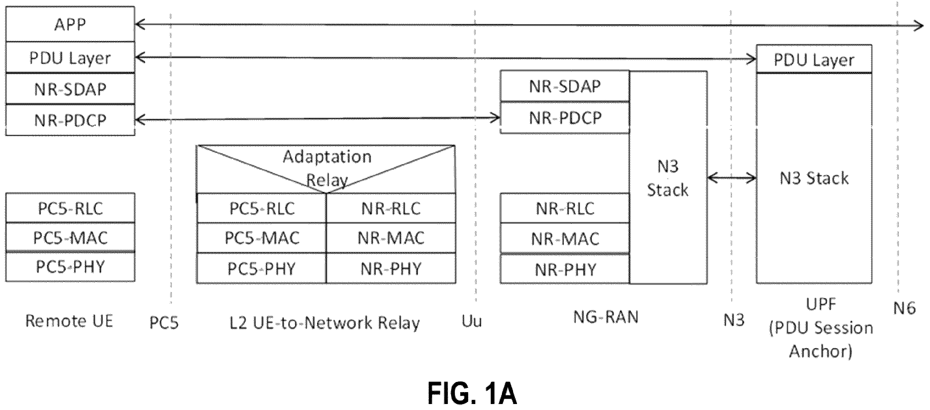

FIG. 1A illustrates the protocol stack for the user plane transport, related to a packet data unit (PDU) Session, including a Layer 2 UE-to-Network Relay UE. The PDU layer corresponds to the PDU carried between the remote UE and the Data Network (DN) over the PDU session. It is important to note that the two endpoints of the PDCP (Packet Data Convergence Protocol) link are the remote UE and the gNB. The relay function is performed below PDCP. This means that data security is ensured between the remote UE and the gNB without exposing raw data at the U2N relay UE.

The adaptation relay layer within the UE-to-Network Relay UE can differentiate between signaling radio bearers (SRBs) and data radio bearers (DRBs) for a particular remote UE. The adaption relay layer is also responsible for mapping PC5 traffic to one or more DRBs of the Uu.

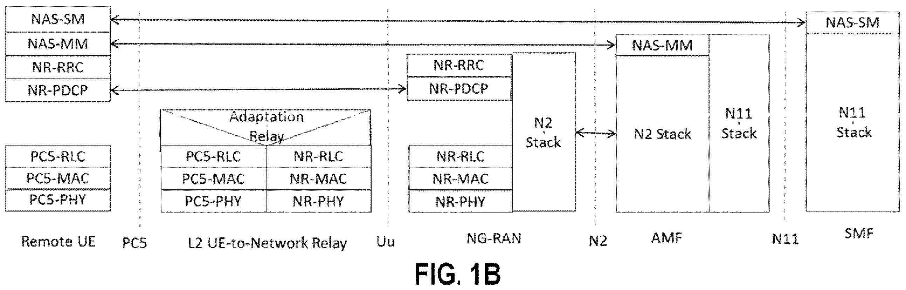

FIG. 1B illustrates the protocol stack of the non-access stratum (NAS) connection for the remote UE to the NAS-mobility management (MM) and NAS-system management (SM) components. The NAS messages are transparently transferred between the remote UE and 5G-acces network (AN) over the Layer 2 UE-to-Network relay UE using:
- PDCP end-to-end connection where the role of the UE-to-Network Relay UE is to relay the PDUs over the signaling radio bear without any modifications.
- N2 connection between the 5G-AN and access management function (AMF) over N2.
- N3 connection AMF and system management function (SMF) over N11.

The role of the U2N Relay UE is to relay the PDUs from the signaling radio bearer without any modifications.

Relay establishment procedure is described below.

A remote UE needs to establish its own PDU sessions/DRBs with the network before user plane data transmission.

PC5-RRC aspects of Rel-16 NR V2X (Vehicle-to-Everything) PC5 unicast link establishment procedures can be reused to setup a secure unicast link between remote UE and relay UE for L2 UE-to-Network relaying before remote UE establishes a Uu RRC connection with the network via relay UE.

For both in-coverage and out-of-coverage cases, when the remote UE initiates the first RRC message for its connection establishment with gNB, the PC5 L2 configuration for the transmission between the remote UE and the UE-to-Network relay UE can be based on the RLC (Radio Link Control) and/or MAC configuration defined in specifications.

The establishment of Uu SRB1/SRB2 and DRB of the remote UE is subject to legacy Uu configuration procedures for L2 UE-to-Network Relay.

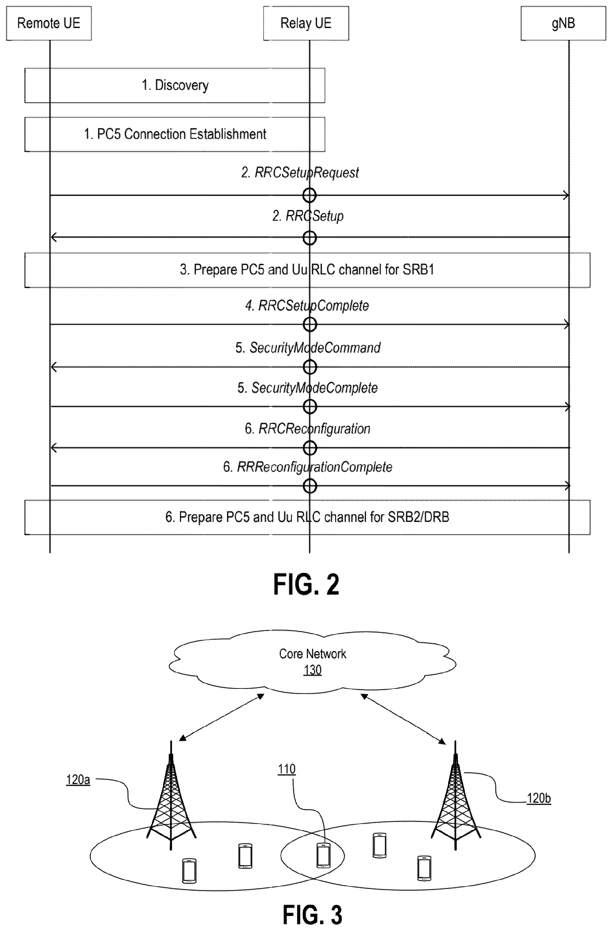

FIG. 2 illustrates an example of a high level connection establishment procedure applies to L2 UE-to-Network Relay. At block 1, the Remote UE and relay UE perform a discovery procedure, and establish a PC5-RRC connection using the legacy Rel-16 procedure as a baseline.

At block 2, the remote UE sends the first RRC message (i.e., *RRCSetupRequest)* for its connection establishment with gNB via the relay UE, using a default L2 configuration on PC5. The gNB responds with an *RRCSetup* message to the remote UE. The *RRCSetup* delivery to the remote UE uses the default configuration on PC5. If the relay UE had not started in RRC_CONNECTED, it would need to do its own connection establishment as part of this process.

At block 3, the gNB and relay UE perform relaying channel setup procedure over Uu. According to the configuration from gNB, the relay/remote UE establishes an RLC channel for relaying of SRB1 towards the remote UE over PC5. This process prepares the relaying channel for SRB1.

At block 4, the remote UE SRB1 message (e.g. an *RRCSetupComplete* message) is sent to the gNB via the relay UE using SRB1 relaying channel over PC5. Then the remote UE is RRC connected over Uu.

At block 5, the remote UE and gNB establish security following legacy procedure and the security messages are forwarded through the relay UE.

At block 6, the gNB sets up additional RLC channels between the gNB and relay UE for traffic relaying. According to the configuration from the gNB, the relay/remote UE sets up additional RLC channels between the remote UE and relay UE for traffic relaying. The gNB sends an *RRCReconfiguration* to the remote UE via the relay UE, to set up the relaying SRB2/DRBs. The remote UE sends an *RRCReconfigurationComplete* to the gNB via the relay UE as a response.

Besides the connection establishment procedure, for L2 UE-to-Network relay, the RRC reconfiguration and RRC connection release procedures can reuse the legacy RRC procedure, with the message content/configuration design left to WI phase. Furthermore, the RRC connection re-establishment and RRC connection resume procedures can reuse the legacy RRC procedure as baseline, by considering the above connection establishment procedure of L2 UE-to-Network Relay to handle the relay specific part, with the message content/configuration design left to WI phase.

There currently exist certain challenges. It is unclear how the remote UE and relay UE should set the establishment cause when accessing the network. As a result, a relay UE can set any establishment cause, regardless of the establishment cause set by the remote UE. However, if for example, a remote UE tries to access for emergency purposes (or anyway set an establishment cause to have priority access e.g., mcs_PriorityAccess), if the relay UE will not set an establishment cause in line with that of the remote UE, its access to the network may fail and the relay connection may not be setup. This of course can be extremely bad in cases of public safety services where priority access is of a fundamental importance for the network.

WO2022/032034A1 describes methods and apparatus for link management and recovery for Sidelink relays.

US2020/178343A1 discloses a method and an apparatus for performing a radio rescource control (RRC) connection procedure of a relay user equipment (UE) in a wireless communication system.

R2-2109859 (ZTE/Sanechips) "Consideration on the connection management of SL relay" discloses control plane procedures for user equipment (UE) to Network relay related to access control, connection management, system information acquisition and paging.

R2-2203306 (Intel Corporation) "Setting cause value for Relay UE access" addresses aspects on establishment/resume cause and support of access control for layer 2 (L2) based user equipment (UE) to Network relay scenario.

### Summary

Certain aspects of the disclosure and their embodiments may provide solutions to these or other challenges. The scope of the invention is defined by the appended claims.

According to an embodiment, a method of operating a remote communication device is provided. According to the method, the remote communication device determines an establishment cause for connecting to a network node of a communications network. Further, the remote communication device transmits a message including the establishment cause to a relay communication device. Responsive to transmitting the message, the remote communication device establishes a connection to the network node via the relay communication device.

According to a further embodiment, a method of operating a relay communication device is provided. According to the method, the relay communication device determines an establishment cause for a remote communication device connecting to a network node of a communications network via the relay communication device. Responsive to determining the establishment cause, the relay communication device establishes a connection between the relay communication device and the network node using the establishment cause.

According to a further embodiment, a remote communication device is provided. The remote communication device is configured to determine an establishment cause for connecting to a network node of a communications network. Further, the remote communication device is configured to transmit a message including the establishment cause to a relay communication device. Further, the remote communication device is configured to, responsive to transmitting the message, establish a connection to the network node via the relay communication device.

According to a further embodiment, a remote communication device is provided. The remote communication device comprises processing circuitry and a memory. The memory contains program code executable by the processing circuitry. Execution of the program code by the processing circuitry causes the remote communication device to determine an establishment cause for connecting to a network node of a communications network. Further, execution of the program code by the processing circuitry causes the remote communication device to transmit a message including the establishment cause to a relay communication device. Further, execution of the program code by the processing circuitry causes the remote communication device to, responsive to transmitting the message, establish a connection to the network node via the relay communication device.

According to a further embodiment, a relay communication device is provided. The relay communication device is configured to determine an establishment cause for a remote communication device connecting to a network node of a communications network via the relay communication device. Further, the relay communication device is configured to, responsive to determining the establishment cause, establish a connection between the relay communication device and the network node using the establishment cause.

According to a further embodiment, a relay communication device is provided. The relay communication device comprises processing circuitry and a memory. The memory contains program code executable by the processing circuitry. Execution of the program code by the processing circuitry causes the relay communication device to determine an establishment cause for a remote communication device connecting to a network node of a communications network via the relay communication device. Further, execution of the program code by the processing circuitry causes the relay communication device to, responsive to determining the establishment cause, establish a connection between the relay communication device and the network node using the establishment cause.

According to a further embodiment, a computer program or computer program product is provided, e.g., in the form of a non-transitory storage medium, which comprises program code to be executed by processing circuitry of a remote communication device. Execution of the program code causes the remote communication device to determine an establishment cause for connecting to a network node of a communications network. Further, execution of the program code causes the remote communication device to transmit a message including the establishment cause to a relay communication device. Further, execution of the program code causes the remote communication device to, responsive to transmitting the message, establish a connection to the network node via the relay communication device.

According to a further embodiment, a computer program or computer program product is provided, e.g., in the form of a non-transitory storage medium, which comprises program code to be executed by processing circuitry of a relay communication device. Execution of the program code causes the relay communication device to determine an establishment cause for a remote communication device connecting to a network node of a communications network via the relay communication device. Further, execution of the program code causes the relay communication device to, responsive to determining the establishment cause, establish a connection between the relay communication device and the network node using the establishment cause.

Details of such embodiments and further embodiments will be apparent from the following detailed description.

### Brief Description of the Drawings

The accompanying drawings, which are included to provide a further understanding of the disclosure and are incorporated in and constitute a part of this application, illustrate certain non-limiting embodiments of inventive concepts. In the drawings:
FIG. 1A is a block diagram illustrating an example of a protocol stack for the user plane for a Layer 2 UE-to-Network Relay UE;
FIG. 1B is a block diagram illustrating an example of a protocol stack for the control plane for a Layer 2 UE-to-Network Relay UE;
FIG. 2 is a signal flow diagram illustrating an example of a procedure for remote UE connection establishment;
FIG. 3 is a schematic diagram illustrating an example of a 5th generation network in which concepts in accordance with some embodiments may be applied;
FIG. 4 illustrates an example of an information message in accordance with some embodiments;
FIG. 5 is a flow chart illustrating an example of operations performed by a remote UE in accordance with some embodiments;
FIG. 6 is a flow chart illustrating an example of operations performed by a relay UE in accordance with some embodiments;
FIG. 7 is a block diagram of a communication system in accordance with some embodiments;
FIG. 8 is a block diagram of a user equipment in accordance with some embodiments
FIG. 9 is a block diagram of a network node in accordance with some embodiments;

### Detailed Description

Some of the embodiments contemplated herein will now be described more fully with reference to the accompanying drawings. Embodiments are provided by way of example to convey the scope of the subject matter to those skilled in the art, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

Various embodiments described herein generally refer to the NR radio access technology (RAT) but can be also applied to the LTE RAT, and/or any other RAT enabling direct communication between two (or more) nearby devices (e.g., WIFI, ZIGBEE, BLUETOOTH) without any loss of meaning.

A remote communication device, also referred to a user equipment (UE), can be referred to herein as a remote (RM) UE that is able to transmit/receive packet from/to the gNB via an intermediate mobile terminal (e.g. a U2N relay UE) that can be referred to as a relay (RL) UE.

The link or radio link over which the signals are transmitted between at least two UEs for device-to-device (D2D) operation can be referred to herein as the sidelink (SL). The signals transmitted between the UEs for D2D operation can be referred to as SL signals. The term SL may also interchangeably be referred to as D2D link, V2X link, ProSe link, peer-to-peer link, PC5 link, etc. The SL signals may also interchangeably be referred to as V2X signals, D2D signals, ProSe signals, PC5 signals, peer-to-peer signals, etc.

Various embodiments described herein allow a relay UE to set an establishment cause in line with what is set by the remote UE. In some examples, the relay UE may set an establishment cause in line with what is set by the remote UE for specific cases (e.g., emergency-related services).

In some embodiments, the remote UE when setting a certain establishment cause to access the network, sends an indication to the relay UE so that the relay UE can set the same establishment cause of the remote UE. In some examples, this indication may be sent only when specific establishment causes are used, or can be sent every time an establishment cause is used. In additional or alternative examples, the indication can be sent over the PC5-RRC message, over SL MAC CE, via a control PDU of the adaptation layer, of via PHY layer (PHY) signaling (e.g., SCI).

In additional or alternative embodiments, the relay UE, if not connected yet to the network (e.g., when in RRC_IDLE/RRC_INACTIVE state), when receiving a new PDU at the sidelink adaptation layer from the remote UE, can implicitly understand that this adaptation layer PDU is carrying an RRC message from the remote UE in order to access the network and, for this reason, it can decode this message (i.e., at the RRC layer) to check which establishment causes has been used by the remote UE.

In additional or alternative embodiments, the remote UE when setting a certain establishment cause to access the network, can trigger a broadcast message (e.g., a discovery message, or sidelink broadcast/groupcast transmission) for informing nearby UEs about the establishment cause that has been used. In such a case the relay UE connected to the remote UE when receiving this broadcast message can set the establishment cause according to what the remote UE has set. In some examples, the broadcast message can be triggered only when an emergency service is ongoing so that the relay UE connected to the remote UE will implicitly understand that an emergency related establishment cause should be used.

Certain embodiments may provide one or more of the following technical advantages. Some embodiments described herein allow a relay UE to set an establishment cause in line with what is set by the remote UE. This can avoid the access of the relay UE being rejected in case the establishment cause used by the relay UE is different from the remote UE (which can be especially important if the remote UE has an emergency-related establishment cause. This can improve user performance and in some examples improve public safety services where a priority access is of a fundamental importance for the network.

FIG. 3 illustrates an example of an NR network, e.g., a 5G network, including a 5G core 5GC network 130, network nodes 120a-b, e.g., corresponding to a 5G base station (gNB), and multiple communication devices 110, e.g., corresponding to a UE. One or more of such UEs may act as a remote UE in accordance with the illustrated concepts, while one or more other UEs may act as a relay UE in accordance with the illustrated concepts.

In some embodiments, the remote UE is in a RRC_IDLE/RRC_INACTIVE state and when accessing the network (e.g., performing the radio resource control (RRC) setup or RRC resume procedure) selects a certain establishment cause to be used. After selection of a certain establishment cause, the remote UE sends an indication to the relay UE so as to inform the relay UE explicitly which establishment cause has been used and thus the relay UE (that is also in RRC_IDLE/RRC_INACTIVE) can also use the same establishment cause of the remote UE.

In some examples, the remote UE may send the signaling to the relay UE according to one of the following signaling alternatives:
- RRC signaling (e.g., PC5-RRC);
- PC5-S signaling;
- Discovery signaling;
- Medium access control (MAC) control element (CE);
- Layer 1 (L1) signaling on channels such as physical sidelink shared channel (PSSCH), physical sidelink control channel (PSCCH), or physical sidelink feedback channel (PSFCH);
- Control protocol data unit (PDU) of a protocol layer such as service data adaptation protocol (SDAP), packet data convergence protocol (PDCP), radio link control (RLC), or an adaptation layer which is introduced for responsible of duplication function

In additional or alternative embodiments, when the remote UE performs the RRC setup or RRC resume procedure and sends the RRCSetupRequest or RRCResumeRequest message to the network via the relay UE, the relay UE if not connected yet to the network (e.g., when in RRC_IDLE/RRC_INACTIVE state), when receiving a new PDU at the sidelink adaptation layer from the remote UE, implicitly understands that this adaptation layer PDU is carrying an RRC message from the remote UE in order to access the network. According to this, the relay UE processes such sidelink adaption layer PDU up until its RRC layer and decodes the message sent by the remote UE to check which establishment causes has been used by the remote UE. Then the Relay UE can set the establishment cause based on the establishment cause set by the remote UE in the message.

In additional or alternative embodiments, when the remote UE performs the RRC setup or RRC resume procedure and sends the RRCSetupRequest or RRCResumeRequest message to the network via the relay UE, the remote UE triggers a broadcast message (e.g., a discovery message, or sidelink broadcast/groupcast transmission) for informing nearby UEs about the establishment cause that has been used. In such a case the relay UE connected to the remote UE when receiving this broadcast message can set the establishment cause according to what the remote UE has set.

In some examples, the broadcast message can be triggered only when an establishment cause that needs a special handling from the network is set. Such establishment cause may for example correspond to an emergency or to a priority access for mission critical services, also denoted as "mcs_priority access". Based on the establishment cause, the relay UE connected to the remote UE will implicitly understand that an emergency related establishment cause should be used.

In additional or alternative examples, the indication or broadcast message is triggered when the remote UE has selected an establishment cause that is different from the previous one.

In additional or alternative examples, the indication or broadcast message is triggered when the remote UE has a new service/traffic/application to handle and that is different from the previous one.

In additional or alternative examples, the indication or broadcast message is triggered every time that the remote UE set an establishment cause during the RRC setup or RRC resume procedure.

In the context of an RRC connection setup procedure as defined in 3GPP TS 38.331 V16.7.0 (2021-12), implementations of concepts of the present disclosure may include the following actions related to transmission of the RRCSetupRequest message by a UE.

The UE shall set the contents of RRCSetupRequest message as follows:
The UE may set an indication of UE identity (denoted as "ue-identity") based on information provided by upper layers, e.g., based on a 5G-S-TMSI (5G Serving Termporary Mobile Subscriber Identity). If no such information is provided by upper layers, the UE may set the indication of UE identity based on a random value. For example, the UE may draw a 39-bit random value in the range 0...2³⁹-1 and set the ue-Identity to this value. The upper layers may provide the 5G-S-TMSI if the UE is registered in the TA (Tracking Area) of the current cell.

If the establishment of the RRC connection is the result of release with redirect with mpsPrioritylndication (either in NR or E-UTRAN), the UE shall an indication of the establishment cause (denoted as "establishmenCause") to "mps-PriorityAccess".

According to one option, if the UE is connected with a L2 U2N Remote UE via a PC5-RRC connection, i.e. the UE is a L2 U2N Relay UE, the UE may trigger a remote UE information procedure and set the value of a sidelink establishment cause indication (denoted as "sl-EstablishmentCause") to "mps-PriorityAccess". Else the UE may set the establishmentCause in accordance with the information received from upper layer.

According to an alternative option, if the UE is connected with a L2 U2N Remote UE via a PC5-RRC connection, i.e. the UE is a L2 U2N Relay UE, and if the establishmentCause is set to "emergency" or "mps-PriorityAccess", the UE may trigger a remote UE information procedure and set the value of sl-EstablishmentCause to "mps-PriorityAccess".

According to an alternative option, if the UE is connected with a L2 U2N Remote UE via PC5-RRC connection, i.e. the UE is a L2 U2N Relay UE, the UE may trigger a remote UE information procedure and set the value of sl-EstablishmentCause to the same value as the value of establishmentCause.

The UE may then submit the RRCSetupRequest message to lower layers for transmission.

The UE may continue cell re-selection related measurements as well as cell re-selection evaluation. If the conditions for cell re-selection are fulfilled, the UE may perform cell re-selection as specified.

For an L2 U2N Remote UE in RRC_IDLE/INACTIVE state, a cell (re)selection procedure and relay (re)selection procedure may be are performed independently, and the UE may decide to select either a cell or a L2 U2N Relay UE.

The UE may initiate the procedure when upper layers or access stratum (AS), e.g., when responding to RAN paging, upon triggering RNA (RAN-based notification area) updates while the UE is in RRC_INACTIVE, or for NR sidelink communication or V2X sidelink communication, requests to resume a suspended RRC connection. The UE may ensure having valid and up to date essential system information before initiating the procedure.

Upon initiation of the procedure, the UE may:
- If the resumption of the RRC connection is triggered by response to NG-RAN paging, select '0' as the Access Category and perform the unified access control procedure as specified in using the selected Access Category and one or more Access Identities provided by upper layers. If the access attempt is barred, the procedure ends.
- Else, if the resumption of the RRC connection is triggered by upper layers and if the upper layers provide an Access Category and one or more Access Identities, perform the unified access control procedure using the Access Category and Access Identities provided by upper layers. If the access attempt is barred, the procedure ends.
- Else, if the resumption of the RRC connection is triggered by upper layers and if the resumption occurs after release with redirect with mpsPrioritylndication:
- Set the resumeCause to mps-PriorityAccess.
- If the UE is connected with a L2 U2N Remote UE via PC5-RRC connection, i.e., the UE is a L2 U2N Relay UE, trigger a remote UE information procedure and set the value of sl-ResumeCause to mps-PriorityAccess. Alternatively, if the resumeCause is set to emergency or mps-PriorityAccess, trigger a remote UE information procedure and set the value of sl-ResumeCause to mps-PriorityAccess. Alternatively, trigger a remote UE information procedure and set the value of sl-ResumeCause to the same value as the value of resumeCause.
- Else, set the resumeCause in accordance with the information received from upper layers.
- Else, if the resumption of the RRC connection is triggered due to an RNA update and if an emergency service is ongoing:
- Select '2' as the Access Category and set the resumeCause to emergency. If the UE is connected with a L2 U2N Remote UE via PC5-RRC connection (i.e. the UE is a L2 U2N Relay UE), trigger a remote UE information procedure and set the value of sl-ResumeCause to emergency.
- Else, select '8' as the Access Category and perform the unified access control procedure using the selected Access Category and one or more Access Identities to be applied as specified in 3GPP TS 24.501.
- If the access attempt is barred, set a variable denoted as "pendingRNA-Update" to true and the procedure ends.

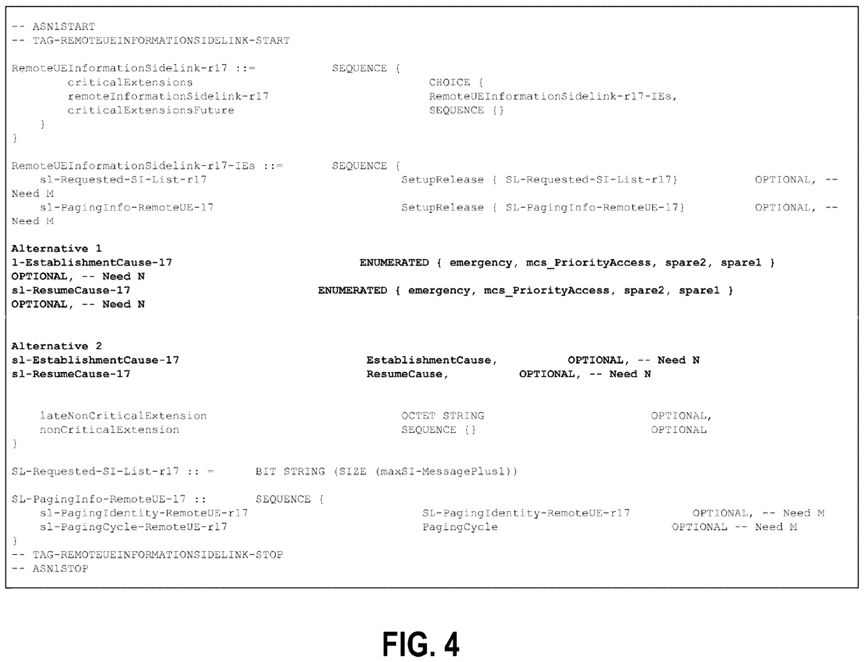

A message denoted as "RemoteUElnformationSidelink" may be used to request SIB(s) or provide paging related information in the remote UE information procedure. The RemoteUElnformationSidelink message may be sent on Signalling radio bearer SL-SRB3, using AM (Acknowledged Mode) RLC-SAP, and SCCH as logical channel. The RemoteUElnformationSidelink message may be sent from the L2 U2N Remote UE to L2 U2N Relay UE. FIG. 4 shows an example configuration of the RemoteUElnformationSidelink message.

Information Elements of the RemotelnformationSidelink message include:
sl-EstablishmentCause-17: Indication of establishment cause for the sidelink. Possible values are "emergency" or "mcs_PriorityAccess".

sl-ResumeCause-17: Indication of resume cause for the sidelink. Possible values are "emergency" or "mcs_PriorityAccess".

sl-Requested-SI-List: A list of requested SI messages. The first/leftmost bit corresponds to SIB index 1 (i.e. SIB1), the second bit corresponds to SIB index 2 (i.e. SIB2), and so on.

sl-Paginglnfo-RemoteUE: Indicates the paging information used by L2 U2N Relay UE to perform the connected L2 U2N Remote UE's paging monitoring.

sl-Pagingldentity-RemoteUE: Indicates the L2 U2N Remote UE's paging UE ID.

sl-PagingCycle-RemoteUE: Indicates the L2 U2N Remote UE's UE specific DRX (Discontinuos Reception) cycle. Value rf32 corresponds to 32 radio frames, value rf64 corresponds to 64 radio frames and so on.

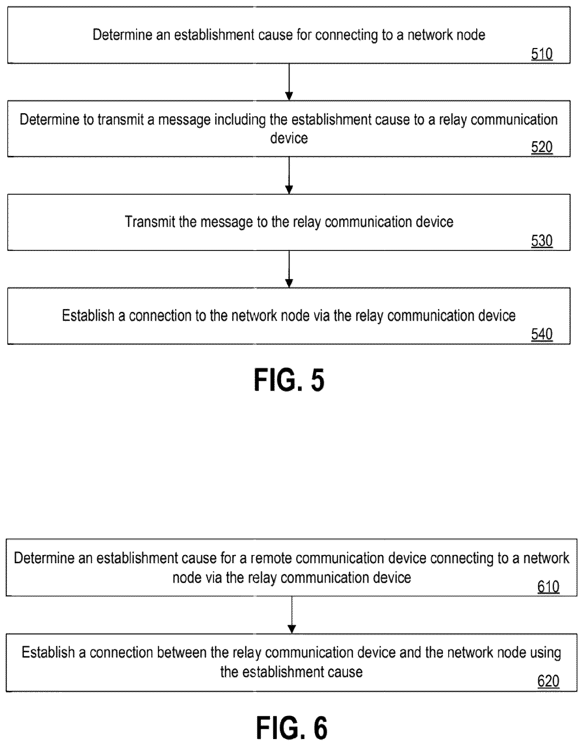

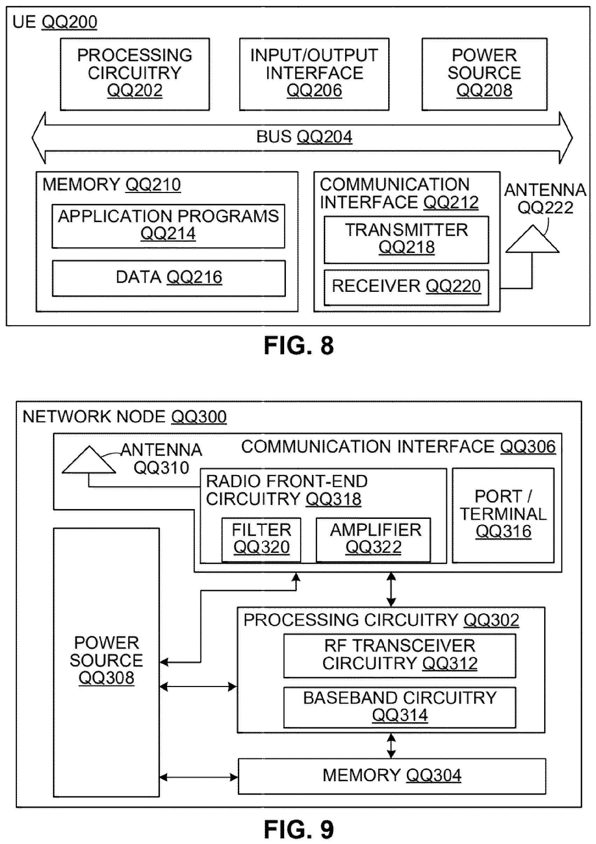

In a first alternative (Alternative 1) of FIG. 4, the indication sl-EstablishmentCause is selected from a list of enumerated values, including "emergency", "mcs_PriorityAccess", and optionally one or more spare values. Similarly, the indication sl-ResumeCause is selected from a list of enumerated values, including "emergency", "mcs_PriorityAccess", and optionally one or more spare values. In a second alternative (Alternative 2) of FIG. 4, the indication sl-EstablishmentCause is set to the same value as the indication establishmentCause. Similarly, the indication sl-ResumeCause is set to the same value as the indication resumeCause.In the description that follows, while the communication device may be any of UE QQ112A-D or QQ200, the communication device QQ200 shall be used to describe the functionality of the operations of the remote communication device. Operations of the communication device QQ200 (implemented using the structure of FIG. 8) will now be discussed with reference to the flow chart of FIG. 5 according to some embodiments of inventive concepts. For example, modules may be stored in memory QQ210 of FIG. 8, and these modules may provide instructions so that when the instructions of a module are executed by respective communication device processing circuitry QQ202, processing circuitry QQ202 performs respective operations of the flow chart.

FIG. 5 illustrates an example of operations performed by a remote communication device.

At block 510, processing circuitry QQ202 determines an establishment cause for connecting to a network node. In some examples, connecting to the network node includes connecting to a communications network (e.g., a 5G network). In some embodiments, determining the establishment cause for connecting to the network node includes determining the establishment cause for reconnecting to the network node while the remote communication device is in a radio resource control inactive state. In other embodiments, determining the establishment cause for connecting to the network node includes determining the establishment cause for establishing a new connection to the network node while the remote communication device is in a radio resource control, RRC, idle state.

In some embodiments, the establishment cause is associated with an emergency or a mcs_PriorityAccess.

At block 520, processing circuitry QQ202 determines to transmit a message including the establishment cause to a relay communication device. In some embodiments, determining to transmit the message includes determining to transmit the message based on at least one of: the establishment cause; the connection (being established) being associated with a new service; the connection being associated with a new traffic; the connection being associated with a new application; a difference between the establishment cause and a previous establishment cause used by the remote communication device; and the establishment cause being associated with a special handling by the communications network.

In additional or alternative embodiments, determining to transmit the message further includes determining a type of the message based on at least one of: the establishment cause; the connection being associated with the new service; the connection being associated with the new traffic; the connection being associated with the new application; the difference between the establishment cause and the previous establishment cause used by the remote communication device; and the establishment cause being associated with the special handling by the communications network.

At block 530, processing circuitry QQ202 transmits, via communication interface QQ212, the message to the relay communication device. In some embodiments, transmitting the message including the establishment cause includes transmitting at least one of: Radio resource control signaling; PC5-S signaling; Discovery signaling; a MAC CE; Layer 1 signaling; and a control protocol data unit.

In additional or alternative embodiments, transmitting the message including the establishment cause includes broadcasting the message to a plurality of communication devices including the relay communication device.

At block 540, processing circuitry QQ202 establishes, via communication interface QQ212, a connection to the network node via the relay communication device. In some embodiments, establishing the connection to the network node via the relay communication device includes performing a RRC resume procedure. In other embodiments, establishing the connection to the network node via the relay communication device includes performing a RRC setup procedure.

In some embodiments, establishing the connection to the network node via the relay communication device includes establishing a sidelink connection.

Various operations of FIG. 5 may be optional with respect to some embodiments. For example, in regards to Embodiment 1 (described below), block 520 may be optional.

In the description that follows, while the communication device may be any of UE QQ112A-D or QQ200, the communication device QQ200 shall be used to describe the functionality of the operations of the relay communication device. Operations of the communication device QQ200 (implemented using the structure of FIG. 8) will now be discussed with reference to the flow chart of FIG. 6 according to some embodiments of inventive concepts. For example, modules may be stored in memory QQ210 of FIG. 8, and these modules may provide instructions so that when the instructions of a module are executed by respective communication device processing circuitry QQ202, processing circuitry QQ202 performs respective operations of the flow chart.

FIG. 6 illustrates an example of operations performed by a relay communication device.

At block 610, processing circuitry QQ202 determines an establishment cause for a remote communication device connecting to a network node via the relay communication device. In some embodiments, determining the establishment cause includes determining the establishment cause for reconnecting the remote communication device to the network node while the remote communication device is in a radio resource control inactive state. In other embodiments, determining the establishment cause includes determining the establishment cause for establishing a new connection between the remote communication device and the network node while the remote communication device is in a radio resource control idle state.

In some embodiments, the establishment cause is associated with an emergency or a mcs_PriorityAccess.

In additional or alternative embodiments, determining the establishment cause for the remote communication device includes receiving a message including the establishment cause from the remote communication device. In some examples, receiving the message including the establishment cause includes receiving at least one of: Radio resource control signaling; PC5-S signaling; Discovery signaling; a MAC CE; Layer 1 signaling; and a control protocol data unit. In additional or alternative examples, the message is a broadcast message. In additional or alternative examples, the message is a part of a connection establishment message to be forwarded to the network node and determining the establishment cause further includes decoding a portion of the connection establishment message including the establishment cause.

At block 620, processing circuitry QQ202 establishes, via communication interface QQ212, a connection between the relay communication device and the network node using the establishment cause. In some embodiments, establishing the connection between the relay communication device and the network node includes reestablishing the connection between the remote communication device and the network node via the relay communication node. In other embodiments, establishing the connection between the relay communication device and the network node includes establishing the new connection between the remote communication device and the network node via the relay communication node.

In some embodiments, establishing the connection between the relay communication device and the network node includes establishing a portion of a sidelink connection between the remote communication device and the network node. In additional or alternative embodiments, the network node is part of a communications network (e.g., a 5G network).

Various operations of FIG. 6 may be optional with respect to some embodiments.

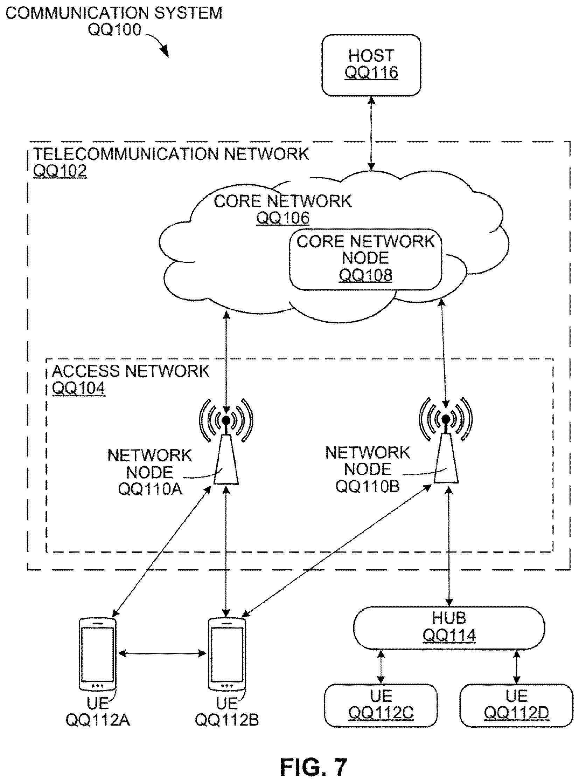

FIG. 7 shows an example of a communication system QQ100 in accordance with some embodiments.

In the example, the communication system QQ100 includes a telecommunication network QQ102 that includes an access network QQ104, such as a radio access network (RAN), and a core network (CN) QQ106, which includes one or more core network nodes QQ108. The access network QQ104 includes one or more access network nodes, such as network nodes QQ110a and QQ110b (one or more of which may be generally referred to as network nodes QQ110), or any other similar 3^{rd} Generation Partnership Project (3GPP) access node or non-3GPP access point. The network nodes QQ110 facilitate direct or indirect connection of user equipment (UE), such as by connecting UEs QQ112a, QQ112b, QQ112c, and QQ112d (one or more of which may be generally referred to as UEs QQ112) to the core network QQ106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system QQ100 may include any number of wired or wireless networks, network nodes, UEs, and/or any other components or systems that may facilitate or participate in the communication of data and/or signals whether via wired or wireless connections. The communication system QQ100 may include and/or interface with any type of communication, telecommunication, data, cellular, radio network, and/or other similar type of system.

The UEs QQ112 may be any of a wide variety of communication devices, including wireless devices arranged, configured, and/or operable to communicate wirelessly with the network nodes QQ110 and other communication devices. Similarly, the network nodes QQ110 are arranged, capable, configured, and/or operable to communicate directly or indirectly with the UEs QQ112 and/or with other network nodes or equipment in the telecommunication network QQ102 to enable and/or provide network access, such as wireless network access, and/or to perform other functions, such as administration in the telecommunication network QQ102.

In the depicted example, the core network QQ106 connects the network nodes QQ110 to one or more hosts, such as host QQ116. These connections may be direct or indirect via one or more intermediary networks or devices. In other examples, network nodes may be directly coupled to hosts. The core network QQ106 includes one more core network nodes (e.g., core network node QQ108) that are structured with hardware and software components. Features of these components may be substantially similar to those described with respect to the UEs, network nodes, and/or hosts, such that the descriptions thereof are generally applicable to the corresponding components of the core network node QQ108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host QQ116 may be under the ownership or control of a service provider other than an operator or provider of the access network QQ104 and/or the telecommunication network QQ102, and may be operated by the service provider or on behalf of the service provider. The host QQ116 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system QQ100 of FIG. 7 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard, e.g., a 6th Generation (6G) standard; wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network QQ102 is a cellular network that implements 3GPP standardized features. Accordingly, the telecommunications network QQ102 may support network slicing to provide different logical networks to different devices that are connected to the telecommunication network QQ102. For example, the telecommunications network QQ102 may provide Ultra Reliable Low Latency Communication (URLLC) services to some UEs, while providing Enhanced Mobile Broadband (eMBB) services to other UEs, and/or Massive Machine Type Communication (mMTC)/Massive loT services to yet further UEs.

In some examples, the UEs QQ112 are configured to transmit and/or receive information without direct human interaction. For instance, a UE may be designed to transmit information to the access network QQ104 on a predetermined schedule, when triggered by an internal or external event, or in response to requests from the access network QQ104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub QQ114 communicates with the access network QQ104 to facilitate indirect communication between one or more UEs (e.g., UE QQ112c and/or QQ112d) and network nodes (e.g., network node QQ110b). In some examples, the hub QQ114 may be a controller, router, content source and analytics, or any of the other communication devices described herein regarding UEs. For example, the hub QQ114 may be a broadband router enabling access to the core network QQ106 for the UEs. As another example, the hub QQ114 may be a controller that sends commands or instructions to one or more actuators in the UEs. Commands or instructions may be received from the UEs, network nodes QQ110, or by executable code, script, process, or other instructions in the hub QQ114. As another example, the hub QQ114 may be a data collector that acts as temporary storage for UE data and, in some embodiments, may perform analysis or other processing of the data. As another example, the hub QQ114 may be a content source. For example, for a UE that is a VR headset, display, loudspeaker or other media delivery device, the hub QQ114 may retrieve VR assets, video, audio, or other media or data related to sensory information via a network node, which the hub QQ114 then provides to the UE either directly, after performing local processing, and/or after adding additional local content. In still another example, the hub QQ114 acts as a proxy server or orchestrator for the UEs, in particular in if one or more of the UEs are low energy loT devices.

The hub QQ114 may have a constant/persistent or intermittent connection to the network node QQ110b. The hub QQ114 may also allow for a different communication scheme and/or schedule between the hub QQ114 and UEs (e.g., UE QQ112c and/or QQ112d), and between the hub QQ114 and the core network QQ106. In other examples, the hub QQ114 is connected to the core network QQ106 and/or one or more UEs via a wired connection. Moreover, the hub QQ114 may be configured to connect to an M2M service provider over the access network QQ104 and/or to another UE over a direct connection. In some scenarios, UEs may establish a wireless connection with the network nodes QQ110 while still connected via the hub QQ114 via a wired or wireless connection. In some embodiments, the hub QQ114 may be a dedicated hub - that is, a hub whose primary function is to route communications to/from the UEs from/to the network node QQ110b. In other embodiments, the hub QQ114 may be a non-dedicated hub - that is, a device which is capable of operating to route communications between the UEs and network node QQ110b, but which is additionally capable of operating as a communication start and/or end point for certain data channels.

FIG. 8 shows a UE QQ200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-loT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE QQ200 includes processing circuitry QQ202 that is operatively coupled via a bus QQ204 to an input/output interface QQ206, a power source QQ208, a memory QQ210, a communication interface QQ212, and/or any other component, or any combination thereof. Certain UEs may utilize all or a subset of the components shown in FIG. 8. The level of integration between the components may vary from one UE to another UE. Further, certain UEs may contain multiple instances of a component, such as multiple processors, memories, transceivers, transmitters, receivers, etc.

The processing circuitry QQ202 is configured to process instructions and data and may be configured to implement any sequential state machine operative to execute instructions stored as machine-readable computer programs in the memory QQ210. The processing circuitry QQ202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry QQ202 may include multiple central processing units (CPUs).

In the example, the input/output interface QQ206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE QQ200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source QQ208 is structured as a battery or battery pack. Other types of power sources, such as an external power source (e.g., an electricity outlet), photovoltaic device, or power cell, may be used. The power source QQ208 may further include power circuitry for delivering power from the power source QQ208 itself, and/or an external power source, to the various parts of the UE QQ200 via input circuitry or an interface such as an electrical power cable. Delivering power may be, for example, for charging of the power source QQ208. Power circuitry may perform any formatting, converting, or other modification to the power from the power source QQ208 to make the power suitable for the respective components of the UE QQ200 to which power is supplied.

The memory QQ210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory QQ210 includes one or more application programs QQ214, such as an operating system, web browser application, a widget, gadget engine, or other application, and corresponding data QQ216. The memory QQ210 may store, for use by the UE QQ200, any of a variety of various operating systems or combinations of operating systems.

The memory QQ210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM (Universal Subscriber Identity Module) and/or ISIM (integrated SIM), other memory, or any combination thereof. The UICC may for example be an embedded UICC (eUICC), integrated UICC (iUICC) or a removable UICC commonly known as 'SIM card.' The memory QQ210 may allow the UE QQ200 to access instructions, application programs and the like, stored on transitory or non-transitory memory media, to off-load data, or to upload data. An article of manufacture, such as one utilizing a communication system may be tangibly embodied as or in the memory QQ210, which may be or comprise a device-readable storage medium.

The processing circuitry QQ202 may be configured to communicate with an access network or other network using the communication interface QQ212. The communication interface QQ212 may comprise one or more communication subsystems and may include or be communicatively coupled to an antenna QQ222. The communication interface QQ212 may include one or more transceivers used to communicate, such as by communicating with one or more remote transceivers of another device capable of wireless communication (e.g., another UE or a network node in an access network). Each transceiver may include a transmitter QQ218 and/or a receiver QQ220 appropriate to provide network communications (e.g., optical, electrical, frequency allocations, and so forth). Moreover, the transmitter QQ218 and receiver QQ220 may be coupled to one or more antennas (e.g., antenna QQ222) and may share circuit components, software or firmware, or alternatively be implemented separately.

In the illustrated embodiment, communication functions of the communication interface QQ212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface QQ212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an loT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the loT device in addition to other components as described in relation to the UE QQ200 shown in FIG. 8.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-loT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

FIG. 9 shows a network node QQ300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node QQ300 includes a processing circuitry QQ302, a memory QQ304, a communication interface QQ306, and a power source QQ308. The network node QQ300 may be composed of multiple physically separate components (e.g., a NodeB component and a RNC component, or a BTS component and a BSC component, etc.), which may each have their own respective components. In certain scenarios in which the network node QQ300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node QQ300 may be configured to support multiple radio access technologies (RATs). In such embodiments, some components may be duplicated (e.g., separate memory QQ304 for different RATs) and some components may be reused (e.g., a same antenna QQ310 may be shared by different RATs). The network node QQ300 may also include multiple sets of the various illustrated components for different wireless technologies integrated into network node QQ300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node QQ300.

The processing circuitry QQ302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ300 components, such as the memory QQ304, to provide network node QQ300 functionality.

In some embodiments, the processing circuitry QQ302 includes a system on a chip (SOC). In some embodiments, the processing circuitry QQ302 includes one or more of radio frequency (RF) transceiver circuitry QQ312 and baseband processing circuitry QQ314. In some embodiments, the radio frequency (RF) transceiver circuitry QQ312 and the baseband processing circuitry QQ314 may be on separate chips (or sets of chips), boards, or units, such as radio units and digital units. In alternative embodiments, part or all of RF transceiver circuitry QQ312 and baseband processing circuitry QQ314 may be on the same chip or set of chips, boards, or units.

The memory QQ304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry QQ302. The memory QQ304 may store any suitable instructions, data, or information, including a computer program, software, an application including one or more of logic, rules, code, tables, and/or other instructions capable of being executed by the processing circuitry QQ302 and utilized by the network node QQ300. The memory QQ304 may be used to store any calculations made by the processing circuitry QQ302 and/or any data received via the communication interface QQ306. In some embodiments, the processing circuitry QQ302 and memory QQ304 is integrated.

The communication interface QQ306 is used in wired or wireless communication of signaling and/or data between a network node, access network, and/or UE. As illustrated, the communication interface QQ306 comprises port(s)/terminal(s) QQ316 to send and receive data, for example to and from a network over a wired connection. The communication interface QQ306 also includes radio front-end circuitry QQ318 that may be coupled to, or in certain embodiments a part of, the antenna QQ310. Radio front-end circuitry QQ318 comprises filters QQ320 and amplifiers QQ322. The radio front-end circuitry QQ318 may be connected to an antenna QQ310 and processing circuitry QQ302. The radio front-end circuitry may be configured to condition signals communicated between antenna QQ310 and processing circuitry QQ302. The radio front-end circuitry QQ318 may receive digital data that is to be sent out to other network nodes or UEs via a wireless connection. The radio front-end circuitry QQ318 may convert the digital data into a radio signal having the appropriate channel and bandwidth parameters using a combination of filters QQ320 and/or amplifiers QQ322. The radio signal may then be transmitted via the antenna QQ310. Similarly, when receiving data, the antenna QQ310 may collect radio signals which are then converted into digital data by the radio front-end circuitry QQ318. The digital data may be passed to the processing circuitry QQ302. In other embodiments, the communication interface may comprise different components and/or different combinations of components.

In certain alternative embodiments, the network node QQ300 does not include separate radio front-end circuitry QQ318, instead, the processing circuitry QQ302 includes radio front-end circuitry and is connected to the antenna QQ310. Similarly, in some embodiments, all or some of the RF transceiver circuitry QQ312 is part of the communication interface QQ306. In still other embodiments, the communication interface QQ306 includes one or more ports or terminals QQ316, the radio front-end circuitry QQ318, and the RF transceiver circuitry QQ312, as part of a radio unit (not shown), and the communication interface QQ306 communicates with the baseband processing circuitry QQ314, which is part of a digital unit (not shown).

The antenna QQ310 may include one or more antennas, or antenna arrays, configured to send and/or receive wireless signals. The antenna QQ310 may be coupled to the radio front-end circuitry QQ318 and may be any type of antenna capable of transmitting and receiving data and/or signals wirelessly. In certain embodiments, the antenna QQ310 is separate from the network node QQ300 and connectable to the network node QQ300 through an interface or port.

The antenna QQ310, communication interface QQ306, and/or the processing circuitry QQ302 may be configured to perform any receiving operations and/or certain obtaining operations described herein as being performed by the network node. Any information, data and/or signals may be received from a UE, another network node and/or any other network equipment. Similarly, the antenna QQ310, the communication interface QQ306, and/or the processing circuitry QQ302 may be configured to perform any transmitting operations described herein as being performed by the network node. Any information, data and/or signals may be transmitted to a UE, another network node and/or any other network equipment.

The power source QQ308 provides power to the various components of network node QQ300 in a form suitable for the respective components (e.g., at a voltage and current level needed for each respective component). The power source QQ308 may further comprise, or be coupled to, power management circuitry to supply the components of the network node QQ300 with power for performing the functionality described herein. For example, the network node QQ300 may be connectable to an external power source (e.g., the power grid, an electricity outlet) via an input circuitry or interface such as an electrical cable, whereby the external power source supplies power to power circuitry of the power source QQ308. As a further example, the power source QQ308 may comprise a source of power in the form of a battery or battery pack which is connected to, or integrated in, power circuitry. The battery may provide backup power should the external power source fail.

Embodiments of the network node QQ300 may include additional components beyond those shown in FIG. 9 for providing certain aspects of the network node's functionality, including any of the functionality described herein and/or any functionality necessary to support the subject matter described herein. For example, the network node QQ300 may include user interface equipment to allow input of information into the network node QQ300 and to allow output of information from the network node QQ300. This may allow a user to perform diagnostic, maintenance, repair, and other administrative functions for the network node QQ300.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

## Claims

1. A method of operating a remote communication device, the method comprising:
determining (510) an establishment cause for connecting to a network node of a communications network;
transmitting (530) a broadcast message including the establishment cause to a relay communication device; and
responsive to transmitting the broadcast message, establishing (540) a connection to the network node via the relay communication device;
wherein the establishment cause is associated with an emergency service.

2. The method of claim 1,
wherein determining the establishment cause for connecting to the network node comprises determining the establishment cause for reconnecting to the network node while the remote communication device is in a radio resource control, RRC, inactive state, and
wherein establishing the connection to the network node via the relay communication device comprises performing a RRC resume procedure.

3. The method of claim 1,
wherein determining the establishment cause for connecting to the network node comprises determining the establishment cause for establishing a new connection to the network node while the remote communication device is in an RRC idle state, and
wherein establishing the connection to the network node via the relay communication device comprises performing a RRC setup procedure.

4. The method of any of claims 1-3, further comprising:
determining (520) to transmit the message based on at least one of:
the establishment cause;
the connection being associated with a new service;
the connection being associated with a new traffic;
the connection being associated with a new application;
a difference between the establishment cause and a previous establishment cause used by the remote communication device; and
the establishment cause being associated with a special handling by the communications network.

5. The method of claim 4,
wherein determining to transmit the message further comprises determining a type of the message based on at least one of:
the establishment cause;
the connection being associated with the new service;
the connection being associated with the new traffic;
the connection being associated with the new application;
the difference between the establishment cause and the previous establishment cause used by the remote communication device; and
the establishment cause being associated with the special handling by the communications network.

6. The method of any of claims 1-5,
wherein transmitting the message including the establishment cause comprises transmitting at least one of:
Radio resource control signaling;
PC5-S signaling;
Discovery signaling;
a Medium Access Control, MAC, Control Element;
Layer 1 signaling; and
a control protocol data unit.

7. A method of operating a relay communication device, the method comprising:
determining (610) an establishment cause for a remote communication device connecting to a network node of a communications network via the relay communication device, by receiving a broadcast message including the establishment cause from the remote communication device;
responsive to determining the establishment cause, establishing (620) a connection between the relay communication device and the network node using the establishment cause;
wherein the establishment cause is associated with an emergency service.

8. The method of claim 7,
wherein determining the establishment cause comprises determining the establishment cause for reconnecting the remote communication device to the network node while the remote communication device is in a radio resource control, RRC, inactive state, and
wherein establishing the connection between the relay communication device and the network node comprises reestablishing the connection between the remote communication device and the network node via the relay communication node.

9. The method of claim 7,
wherein determining the establishment cause comprises determining the establishment cause for establishing a new connection between the remote communication device and the network node while the remote communication device is in a radio resource control, RRC, idle state, and
wherein establishing the connection between the relay communication device and the network node comprises establishing the new connection between the remote communication device and the network node via the relay communication node.

10. The method of any of claims 7-9,
wherein determining the establishment cause for the remote communication device comprises receiving a message including the establishment cause from the remote communication device.

11. The method of any of claims 7-10,
wherein receiving the message including the establishment cause comprises receiving at least one of:
Radio resource control signaling;
PC5-S signaling;
Discovery signaling;
a Medium Access Control, MAC, Control Element;
Layer 1 signaling; and
a control protocol data unit.

12. The method of any of claims 7-11,
wherein establishing the connection between the relay communication device and the network node comprises establishing a portion of a sidelink connection between the remote communication device and the network node.

13. A remote communication device (QQ112A-D, QQ200), the remote communication device being configured to:
determine (510) an establishment cause for connecting to a network node of a communications network;
transmit (530) a broadcast message including the establishment cause to a relay communication device; and
responsive to transmitting the broadcast message, establish (540) a connection to the network node via the relay communication device;
wherein the establishment cause is associated with an emergency service.

14. The remote communication device (QQ112A-D, QQ200) of claim 13,
wherein the remote communication device is configured to perform the steps of a method according to any of claims 1-6.

15. A computer program comprising program code to be executed by processing circuitry (QQ202) of a remote communication device (QQ112A-D, QQ200), whereby execution of the program code causes the remote communication device to perform the steps of a method according to any of claims 1-6.

16. A relay communication device (QQ112A-D, QQ200), the relay communication device being configured to:
determine an establishment cause for a remote communication device connecting to a network node of a communications network via the relay communication device, by receiving a broadcast message including the establishment cause from the remote communication device;
responsive to determining the establishment cause, establish a connection between the relay communication device and the network node using the establishment cause; wherein the establishment cause is associated with an emergency service.

17. The relay communication device (QQ112A-D, QQ200) of claim 16,
wherein the remote communication device is configured to perform the steps of a method according to any of claims 7-12.

18. A computer program comprising program code to be executed by processing circuitry (QQ202) of a relay communication device (QQ112A-D, QQ200), whereby execution of the program code causes the relay communication device to perform the steps of a method according to any of claims 7-12.

## Patentansprüche

1. Verfahren zum Betreiben einer Remote-Kommunikationsvorrichtung, wobei das Verfahren umfasst:
Ermitteln (510) einer Herstellungsursache für das Verbinden mit einem Netzwerkknoten eines Kommunikationsnetzwerkes;
Übertragen (530) einer Broadcast-Nachricht, die die Herstellungsursache beinhaltet, an eine Relais-Kommunikationsvorrichtung; und
als Reaktion auf das Übertragen der Broadcast-Nachricht Herstellen (540) einer Verbindung zum Netzwerkknoten über die Relais-Kommunikationsvorrichtung;
wobei die Herstellungsursache mit einem Notfalldienst verknüpft ist.

2. Verfahren nach Anspruch 1,
wobei das Ermitteln der Herstellungsursache zum Verbinden mit dem Netzwerkknoten das Ermitteln der Herstellungsursache für das erneute Verbinden mit dem Netzwerkknoten umfasst, während sich die Remote-Kommunikationsvorrichtung in einem inaktiven Zustand einer Funkressourcensteuerung, RRC, befindet, und
wobei das Herstellen der Verbindung mit dem Netzwerkknoten über die Relais-Kommunikationsvorrichtung das Durchführen einer RRC-Wiederaufnahmeprozedur umfasst.

3. Verfahren nach Anspruch 1,
wobei das Ermitteln der Herstellungsursache zum Verbinden mit dem Netzwerkknoten das Ermitteln der Herstellungsursache zum Herstellen einer neuen Verbindung mit dem Netzwerkknoten umfasst, während sich die Remote-Kommunikationsvorrichtung in einem RRC-Leerlaufzustand befindet, und
wobei das Herstellen der Verbindung mit dem Netzwerkknoten über die Relais-Kommunikationsvorrichtung das Durchführen einer RRC-Einrichtungsprozedur umfasst.

4. Verfahren nach einem der Ansprüche 1 bis 3, ferner umfassend:
Ermitteln (520) zur Übertragung der Nachricht basierend auf mindestens einem aus:
der Herstellungsursache;
der Verbindung, die mit einem neuen Dienst verknüpft ist;
der Verbindung, die mit einem neuen Datenverkehr verknüpft ist;
der Verbindung, die mit einer neuen Anwendung verknüpft ist;
einer Differenz zwischen der Herstellungsursache und einer früheren Herstellungsursache, die von der Remote-Kommunikationsvorrichtung verwendet wird; und
der Herstellungsursache, die mit einer besonderen Behandlung durch das Kommunikationsnetzwerk verknüpft ist.

5. Verfahren nach Anspruch 4,
wobei das Ermitteln zur Übertragung der Nachricht ferner das Ermitteln eines Typs der Nachricht basierend auf mindestens einem umfasst aus:
der Herstellungsursache;
der Verbindung, die mit dem neuen Dienst verknüpft ist;
der Verbindung, die mit dem neuen Datenverkehr verknüpft ist;
der Verbindung, die mit der neuen Anwendung verknüpft ist;
der Differenz zwischen der Herstellungsursache und der früheren Herstellungsursache, die von der Remote-Kommunikationsvorrichtung verwendet wird; und
der Herstellungsursache, die mit der besonderen Behandlung durch das Kommunikationsnetzwerk verknüpft ist.

6. Verfahren nach einem der Ansprüche 1 bis 5,
wobei das Übertragen der Nachricht, die die Herstellungsursache beinhaltet, das Übertragen mindestens eines umfasst aus:
Funkressourcensteuerungssignalisierung;
PC5-S-Signalisierung;
Entdeckungssignalisierung;
einem Medium-Access-Control-(MAC-)Steuerelement;
Layer-1-Signalisierung; und
einer Steuerprotokolldateneinheit.

7. Verfahren zum Betreiben einer Relais-Kommunikationsvorrichtung, wobei das Verfahren umfasst:
Ermitteln (610) einer Herstellungsursache für eine Remote-Kommunikationsvorrichtung, die sich über die Relais-Kommunikationsvorrichtung mit einem Netzwerkknoten eines Kommunikationsnetzwerkes verbindet, durch Empfangen einer Broadcast-Nachricht, die die Herstellungsursache beinhaltet, von der Remote-Kommunikationsvorrichtung;
als Reaktion auf das Ermitteln der Herstellungsursache Herstellen (620) einer Verbindung zwischen der Relais-Kommunikationsvorrichtung und dem Netzwerkknoten unter Verwendung der Herstellungsursache;
wobei die Herstellungsursache mit einem Notfalldienst verknüpft ist.

8. Verfahren nach Anspruch 7,
wobei das Ermitteln der Herstellungsursache das Ermitteln der Herstellungsursache zum erneuten Verbinden der Remote-Kommunikationsvorrichtung mit dem Netzwerkknoten umfasst, während sich die Remote-Kommunikationsvorrichtung in einem inaktiven Zustand einer Funkressourcensteuerung, RRC, befindet, und
wobei das Herstellen der Verbindung zwischen der Relais-Kommunikationsvorrichtung und dem Netzwerkknoten das erneute Herstellen der Verbindung zwischen der Remote-Kommunikationsvorrichtung und dem Netzwerkknoten über den Relais-Kommunikationsknoten umfasst.

9. Verfahren nach Anspruch 7,
wobei das Ermitteln der Herstellungsursache das Ermitteln der Herstellungsursache zum Herstellen einer neuen Verbindung zwischen der Remote-Kommunikationsvorrichtung und dem Netzwerkknoten umfasst, während sich die Remote-Kommunikationsvorrichtung in einem Leerlaufzustand einer Funkressourcensteuerung, RRC, befindet, und
wobei das Herstellen der Verbindung zwischen der Relais-Kommunikationsvorrichtung und dem Netzwerkknoten das Herstellen der neuen Verbindung zwischen der Remote-Kommunikationsvorrichtung und dem Netzwerkknoten über den Relais-Kommunikationsknoten umfasst.

10. Verfahren nach einem der Ansprüche 7 bis 9,
wobei das Ermitteln der Herstellungsursache für die Remote-Kommunikationsvorrichtung das Empfangen einer Nachricht, die die Herstellungsursache beinhaltet, von der Remote-Kommunikationsvorrichtung umfasst.

11. Verfahren nach einem der Ansprüche 7 bis 10,
wobei das Empfangen der Nachricht, die die Herstellungsursache beinhaltet, das Empfangen mindestens eines umfasst aus:
Funkressourcensteuerungssignalisierung;
PC5-S-Signalisierung;
Entdeckungssignalisierung;
einem Medium-Access-Control-(MAC-)Steuerelement;
Layer-1-Signalisierung; und
einer Steuerprotokolldateneinheit.

12. Verfahren nach einem der Ansprüche 7 bis 11,
wobei das Herstellen der Verbindung zwischen der Relais-Kommunikationsvorrichtung und dem Netzwerkknoten das Herstellen eines Teils einer Sidelink-Verbindung zwischen der Remote-Kommunikationsvorrichtung und dem Netzwerkknoten umfasst.

13. Remote-Kommunikationsvorrichtung (QQ112A-D, QQ200), wobei die Remote-Kommunikationsvorrichtung dazu konfiguriert ist:
Ermitteln (510) einer Herstellungsursache für das Verbinden mit einem Netzwerkknoten eines Kommunikationsnetzwerkes;
Übertragen (530) einer Broadcast-Nachricht, die die Herstellungsursache beinhaltet, an eine Relais-Kommunikationsvorrichtung; und
als Reaktion auf das Übertragen der Broadcast-Nachricht Herstellen (540) einer Verbindung zum Netzwerkknoten über die Relais-Kommunikationsvorrichtung;
wobei die Herstellungsursache mit einem Notfalldienst verknüpft ist.

14. Remote-Kommunikationsvorrichtung (QQ112A-D, QQ200) nach Anspruch 13,
wobei die Remote-Kommunikationsvorrichtung dazu konfiguriert ist, die Schritte eines Verfahrens nach einem der Ansprüche 1 bis 6 durchzuführen.

15. Computerprogramm, umfassend einen Programmcode, der durch eine Verarbeitungsschaltung (QQ202) einer Remote-Kommunikationsvorrichtung (QQ112A-D, QQ200) auszuführen ist, wobei das Ausführen des Programmcodes die Remote-Kommunikationsvorrichtung dazu veranlasst, die Schritte eines Verfahrens nach einem der Ansprüche 1 bis 6 durchzuführen.

16. Relais-Kommunikationsvorrichtung (QQ112A-D, QQ200), wobei die Relais-Kommunikationsvorrichtung dazu konfiguriert ist:
Ermitteln einer Herstellungsursache für eine Remote-Kommunikationsvorrichtung, die sich über die Relais-Kommunikationsvorrichtung mit einem Netzwerkknoten eines Kommunikationsnetzwerkes verbindet, durch Empfangen einer Broadcast-Nachricht, die die Herstellungsursache beinhaltet, von der Remote-Kommunikationsvorrichtung;
als Reaktion auf das Ermitteln der Herstellungsursache Herstellen einer Verbindung zwischen der Relais-Kommunikationsvorrichtung und dem Netzwerkknoten unter Verwendung der Herstellungsursache;
wobei die Herstellungsursache mit einem Notfalldienst verknüpft ist.

17. Relais-Kommunikationsvorrichtung (QQ112A-D, QQ200) nach Anspruch 16,
wobei die Remote-Kommunikationsvorrichtung so konfiguriert ist, dass sie die Schritte eines Verfahrens nach einem der Ansprüche 7 bis 12 durchführt.

18. Computerprogramm, umfassend einen Programmcode, der durch eine Verarbeitungsschaltung (QQ202) einer Relais-Kommunikationsvorrichtung (QQ112A-D, QQ200) auszuführen ist, wobei das Ausführen des Programmcodes die Relais-Kommunikationsvorrichtung dazu veranlasst, die Schritte eines Verfahrens nach einem der Ansprüche 7 bis 12 durchzuführen.

## Revendications

1. Procédé de fonctionnement d'un dispositif de communication distant, le procédé comprenant :
la détermination (510) d'une cause d'établissement pour la connexion à un nœud de réseau d'un réseau de communications ;
la transmission (530) d'un message de diffusion incluant la cause d'établissement à un dispositif de communication relais ; et
en réponse à la transmission du message de diffusion, l'établissement (540) d'une connexion au nœud de réseau via le dispositif de communication relais ;
dans lequel la cause d'établissement est associée à un service d'urgence.

2. Procédé selon la revendication 1,
dans lequel la détermination de la cause d'établissement pour la connexion au nœud de réseau comprend la détermination de la cause d'établissement pour la reconnexion au nœud de réseau pendant que le dispositif de communication distant est dans un état inactif de contrôle de ressources radio, RRC, et
dans lequel l'établissement de la connexion au nœud de réseau via le dispositif de communication relais comprend l'exécution d'une procédure de reprise RRC.

3. Procédé selon la revendication 1,
dans lequel la détermination de la cause d'établissement pour la connexion au nœud de réseau comprend la détermination de la cause d'établissement pour l'établissement d'une nouvelle connexion au nœud de réseau pendant que le dispositif de communication distant est dans un état de veille RRC, et
dans lequel l'établissement de la connexion au nœud de réseau via le dispositif de communication relais comprend l'exécution d'une procédure de configuration RRC.

4. Procédé selon l'une quelconque des revendications 1 à 3, comprenant en outre :
la détermination (520) de la transmission du message sur la base d'au moins l'un des éléments suivants :
la cause d'établissement ;
la connexion étant associée à un nouveau service ;
la connexion étant associée à un nouveau trafic ;
la connexion étant associée à une nouvelle application ;
une différence entre la cause d'établissement et une cause d'établissement précédente utilisée par le dispositif de communication distant ; et
la cause d'établissement étant associée à un traitement spécial par le réseau de communications.

5. Procédé selon la revendication 4,
dans lequel la détermination de la transmission du message comprend en outre la détermination d'un type du message sur la base d'au moins l'un des éléments suivants :
la cause d'établissement ;
la connexion étant associée au nouveau service ;
la connexion étant associée au nouveau trafic ;
la connexion étant associée à la nouvelle application ;
la différence entre la cause d'établissement et la cause d'établissement précédente utilisée par le dispositif de communication distant ; et
la cause d'établissement étant associée au traitement spécial par le réseau de communications.

6. Procédé selon l'une quelconque des revendications 1 à 5, dans lequel la transmission du message incluant la cause d'établissement comprend la transmission d'au moins l'un des éléments suivants :
une signalisation de contrôle de ressources radio ;
une signalisation PC5-S ;
une signalisation de découverte ;
un élément de contrôle de contrôle d'accès au support, MAC ;
une signalisation de couche 1 ; et
une unité de données de protocole de contrôle.

7. Procédé de fonctionnement d'un dispositif de communication relais, le procédé comprenant :
la détermination (610) d'une cause d'établissement pour qu'un dispositif de communication distant se connecte à un nœud de réseau d'un réseau de communications via le dispositif de communication relais, par réception d'un message de diffusion incluant la cause d'établissement provenant du dispositif de communication distant ;
en réponse à la détermination de la cause d'établissement, l'établissement (620) d'une connexion entre le dispositif de communication relais et le nœud de réseau en utilisant la cause d'établissement ;
dans lequel la cause d'établissement est associée à un service d'urgence.

8. Procédé selon la revendication 7,
dans lequel la détermination de la cause d'établissement comprend la détermination de la cause d'établissement pour reconnecter le dispositif de communication distant au nœud de réseau pendant que le dispositif de communication distant est dans un état inactif de contrôle de ressources radio, RRC, et
dans lequel l'établissement de la connexion entre le dispositif de communication relais et le nœud de réseau comprend le rétablissement de la connexion entre le dispositif de communication distant et le nœud de réseau via le nœud de communication relais.

9. Procédé selon la revendication 7,
dans lequel la détermination de la cause d'établissement comprend la détermination de la cause d'établissement pour établir une nouvelle connexion entre le dispositif de communication distant et le nœud de réseau pendant que le dispositif de communication distant est dans un état de veille de contrôle de ressources radio, RRC, et
dans lequel l'établissement de la connexion entre le dispositif de communication relais et le nœud de réseau comprend l'établissement de la nouvelle connexion entre le dispositif de communication distant et le nœud de réseau via le nœud de communication relais.

10. Procédé selon l'une quelconque des revendications 7 à 9,
dans lequel la détermination de la cause d'établissement pour le dispositif de communication distant comprend la réception d'un message incluant la cause d'établissement provenant du dispositif de communication distant.

11. Procédé selon l'une quelconque des revendications 7 à 10,
dans lequel la réception du message incluant la cause d'établissement comprend la réception d'au moins l'un des éléments suivants :
une signalisation de contrôle de ressources radio ;
une signalisation PC5-S ;
une signalisation de découverte ;
un élément de contrôle de contrôle d'accès au support, MAC ;
une signalisation de couche 1 ; et
une unité de données de protocole de contrôle.

12. Procédé selon l'une quelconque des revendications 7 à 11,
dans lequel l'établissement de la connexion entre le dispositif de communication relais et le nœud de réseau comprend l'établissement d'une partie d'une connexion de liaison latérale entre le dispositif de communication distant et le nœud de réseau.

13. Dispositif de communication distant (QQ112A-D, QQ200), le dispositif de communication distant étant configuré pour :
déterminer (510) une cause d'établissement pour la connexion à un nœud de réseau d'un réseau de communications ;
transmettre (530) un message de diffusion incluant la cause d'établissement à un dispositif de communication relais ; et
en réponse à la transmission du message de diffusion, établir (540) une connexion au nœud de réseau via le dispositif de communication relais ;
dans lequel la cause d'établissement est associée à un service d'urgence.

14. Dispositif de communication distant (QQ112A-D, QQ200) selon la revendication 13,
dans lequel le dispositif de communication distant est configuré pour réaliser les étapes d'un procédé selon l'une quelconque des revendications 1 à 6.

15. Programme informatique comprenant un code de programme destiné à être exécuté par un circuit de traitement (QQ202) d'un dispositif de communication distant (QQ112A-D, QQ200), moyennant quoi l'exécution du code de programme amène le dispositif de communication distant à réaliser les étapes d'un procédé selon l'une quelconque des revendications 1 à 6.

16. Dispositif de communication relais (QQ112A-D, QQ200), le dispositif de communication relais étant configuré pour :
déterminer une cause d'établissement pour qu'un dispositif de communication distant se connecte à un nœud de réseau d'un réseau de communications via le dispositif de communication relais, par réception d'un message de diffusion incluant la cause d'établissement provenant du dispositif de communication distant ;
en réponse à la détermination de la cause d'établissement, établir une connexion entre le dispositif de communication relais et le nœud de réseau en utilisant la cause d'établissement ;
dans lequel la cause d'établissement est associée à un service d'urgence.

17. Dispositif de communication relais (QQ112A-D, QQ200) selon la revendication 16,
dans lequel le dispositif de communication distant est configuré pour réaliser les étapes d'un procédé selon l'une quelconque des revendications 7 à 12.

18. Programme informatique comprenant un code de programme destiné à être exécuté par un circuit de traitement (QQ202) d'un dispositif de communication relais (QQ112A-D, QQ200), moyennant quoi l'exécution du code de programme amène le dispositif de communication relais à réaliser les étapes d'un procédé selon l'une quelconque des revendications 7 à 12.
